# EUROPÄISCHE PATENTSCHRIFT

(11) **EP 1 008 747 B1**
(45) Veröffentlichungstag und Bekanntmachung des Hinweises auf die Patenterteilung: **04.06.2008**
(21) Anmeldenummer: 99123814.8
(22) Anmeldetag: 01.12.1999
(51) Int. Cl.: F03D 11/00, E04H 12/28

(54) **Schwingungstilger für Windkraftanlagen**
Vibration absorber for wind turbines
Amortisseur de vibration pour éoliennes

(30) Priorität: 08.12.1998 DE 19856500
(43) Veröffentlichungstag der Anmeldung: 14.06.2000
(73) Patentinhaber: Mitsch, Franz, 64646 Heppenheim (DE)
(72) Erfinder: Mitsch, Franz, 64646 Heppenheim (DE)
(74) Vertreter: Benz, Jürgen

(56) Entgegenhaltungen:
- EP-A- 0 098 657
- WO-A-98/38392
- GB-A- 2 040 429
- PATENT ABSTRACTS OF JAPAN vol. 011, no. 135 (M-585), 28. April 1987 (1987-04-28) & JP 61 274134 A (MITSUBISHI HEAVY IND LTD), 4. Dezember 1986 (1986-12-04)

## Beschreibung

Die Erfindung betrifft einen Schwingungstilger, welcher die Funktion aufweist, in hohen turmähnlichen Bauwerken, insbesondere in Türmen von Windkraftanlagen, unerwünscht auftretende Schwingungen zu reduzieren oder zu egalisieren.

Hohe Türme, wie Schornsteine und ähnliches, sind nicht selten großen Windkräften ausgesetzt, worauf sie entsprechend ihren Resonanzeigenschaften zu schwingen beginnen. Schwingungen größerer Amplituden sind aber generell unerwünscht.

Besonders eklatant ist das Problem bei Windkraftanlagen, die nicht selten über 50 Meter hohe schlanke Türme aufweisen, auf denen ein Maschinenhaus mit großen Rotorblättern angebracht ist, wodurch zusammen mit den Windkräften unterschiedliche Kräfte auf das gesamte Bauwerk einwirken. Mit größer werdenden Windkraftanlagen und mit den dadurch immer höher werdenden Türmen werden die Türme, bzw. die Anlagen in zunehmendem Maß schwingungsempfindlicher.

Bei den Anlagen im unmittelbaren Küstenbereich (onshore / offshore), welche neben den Windkräften auch von der Meeresströmung und vom Wellengang bewegt werden, ist eine Lösung der Schwingungsprobleme von besonderer Bedeutung.

Windkraftanlagen haben teilweise drehzahlvariable Maschinen, womit sich ein weiteres Problem ergibt, daß die Betriebsdrehzahl oft die Turmeigenfrequenzen durchläuft, so daß am Turm starke Bewegungen durch Resonanzerscheinungen entstehen.

Die aufgezeigten Schwierigkeiten können durch den Einsatz von Schwingungstilgern gemäß der vorliegenden Erfindung reduziert oder beseitigt werden. Der Einsatz von erfindungsgemäßen Schwingungstilgern bewirkt ferner, daß Windkraftanlagen der heute üblichen Baugrößen ein geringeres Gewicht aufweisen können, was Materialeinsparnis und somit eine kostengünstigere Bauweise zur Folge hat.

Weiterhin wird die durch die Bewegung des Turmes entstehende Materialermüdung durch den Einsatz der erfindungsgemäßen Schwingungstilger reduziert und damit die Lebensdauer der Türme deutlich vergrößert. Gleichzeitig werden auch andere Bauteile wie Generator, Getriebe und nicht zuletzt die Rotorblätter durch die Reduzierung der Bewegung entlastet, so daß auch deren Lebensdauer verlängert wird.

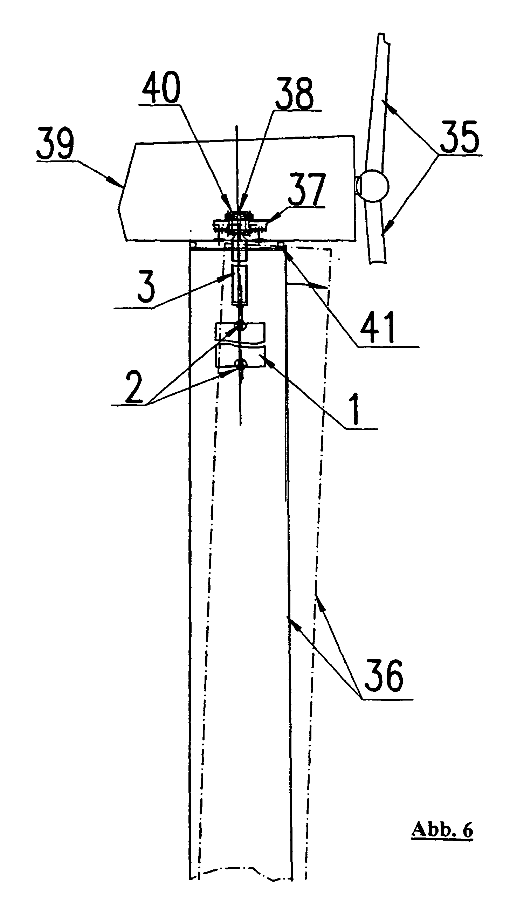

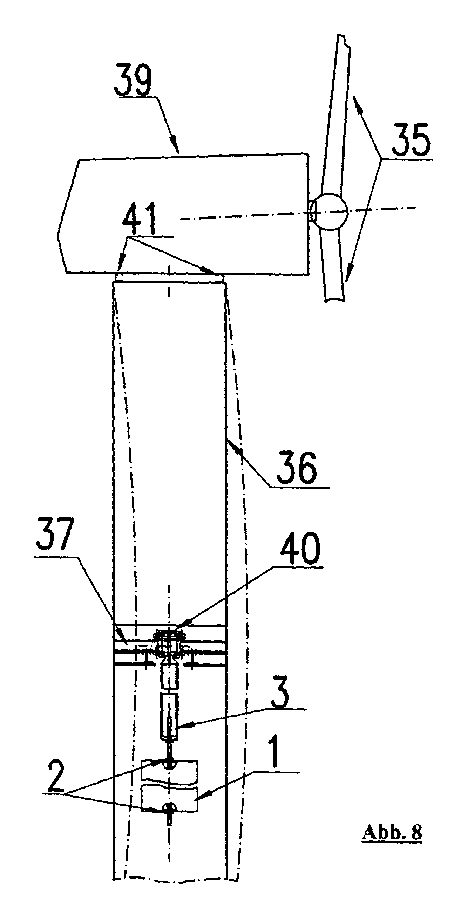

Die Türme haben mehrere Eigenfrequenzen, die sich in unterschiedlicher Turmhöhe in Form von starken Bewegungen bemerkbar machen. Die erste Turm-Eigenfrequenz wirkt sich so aus, daß der Turm sich von unten nach oben biegt und die größte Auslenkung (Schwingungsbauch) sich im oberen Bereich d.h. an dem auf dem Turm befindlichen Maschinenhaus am stärksten auswirkt (Abb. 6). Diese Eigenschwingung hat die kleinste Frequenz. Die weiteren Eigenschwingungen mit höheren Frequenzen haben einen oder mehrere Schwingungsbäuche, d.h. Stellen an denen der Turm Querbewegungen aufzeigt.
Eine solche Schwingungsform ist in Abb. 8 skizziert.

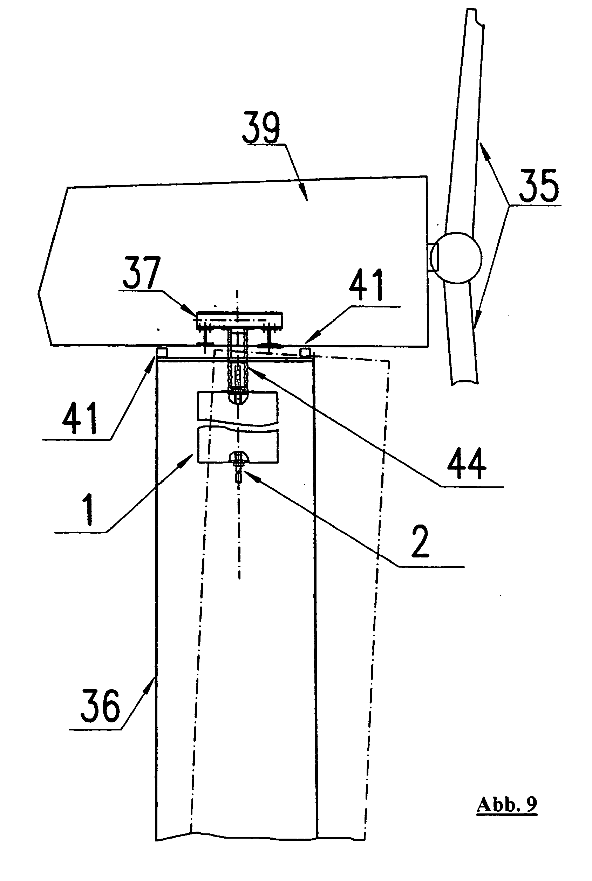

Die Schwingungstilger haben im Bereich der größten Auslenkung des Turmes den größten Effekt und werden sinnvollerweise auch dort mit einem Dämpfungssystem angekoppelt. (z. B. Abb. 6, 8, 9). Zum Tilgen der ersten Eigenfrequenz ist dies der obere Turmbereich bzw. das Maschinenhaus. Zum Tilgen von Frequenzen höherer Ordnung ist es sinnvoll, den Schwingungstilger an der größten Auslenkung des Schwingenden Turmes anzukoppeln.

Schwingungstilger einfachster Bauart, bestehend in der Regel aus einer Pendelstange, Kette oder Drahtseil befestigten Schwingungsmasse, sind im Prinzip im Stand der Technik bekannt (Abb. 1), siehe z.B. das Dokument WO-A-98/38392. Sie werden teilweise in Türmen und Schornsteinen eingesetzt. Entsprechend konzipierte Schwingungstilger wurden in Windkraftanlagen bisher jedoch nicht eingebaut. Der Turm heutiger Windkraftanlagen wird mit einer entsprechend großen Steifigkeit ausgeführt, so daß die Standsicherheit der Windkraftanlagen durch einen relativ hohen Materialeinsatz gewährleistet wird.

Da jedoch die Türme von Windgeneratoren, um die Windkraft maximal auszunutzen, immer höher und auch aus ästhetischen Gründen immer schlanker werden, und die Anlage selbst im Gegensatz zu beispielsweise einfachen statischen Schornsteinen mittels der durch den Wind angetriebenen Rotorblätter aktive Drehbewegungen erzeugt, welche Flieh- Rotations- und andere teilweise komplizierte Kräfte (insbesondere bei stets vorhandenen mehr oder weniger starken Unwuchten) auf die Gesamtkonstruktion vermitteln, wobei teilweise die Betriebsfrequenzen eng bei den Eigenfrequenzen der in der Regel ungedämpften Bauteile liegen können (sind Betriebs- und Eigenfrequenz im ungedämpften Systemen identisch, bedeutet das die Zerstörung der Anlage), ergibt sich das Problem der mannigfaltigen Schwingungserzeugung, bzw. -reduzierung trotz der zur Verfügung stehenden modernen Werkstoffe von neuem. Im Gegensatz zu sonstigen hohen Gebäuden bestehen nämlich Windkraftanlagen aus zwei hintereinander angereihten und zueinander beweglichen Schwingungssystemen (Turm, Rotor) die beide ähnlich große Eigenfrequenzen haben, welche wiederum nahe bei dem Bereich der durch den Betrieb der Anlage entstehenden Frequenzen liegen.

Somit stellt sich die Aufgabe, neue High-Tech-Schwingungstilger zu entwickeln, welche den Erfordernissen, insbesondere in großen Windkraftanlagen, Rechnung tragen. Derartige Schwingungstilger können aber natürlich auch in anderen hohen und schlanken Bauwerken, beispielsweise in / an Abzugsschloten von Heizwerken, Müllverbrennungsanlagen, an Hochspannungsmasten, Sendetürmen oder in / an Stützpfeilern von hohen Brücken oder an Brücken selbst eingesetzt werden.

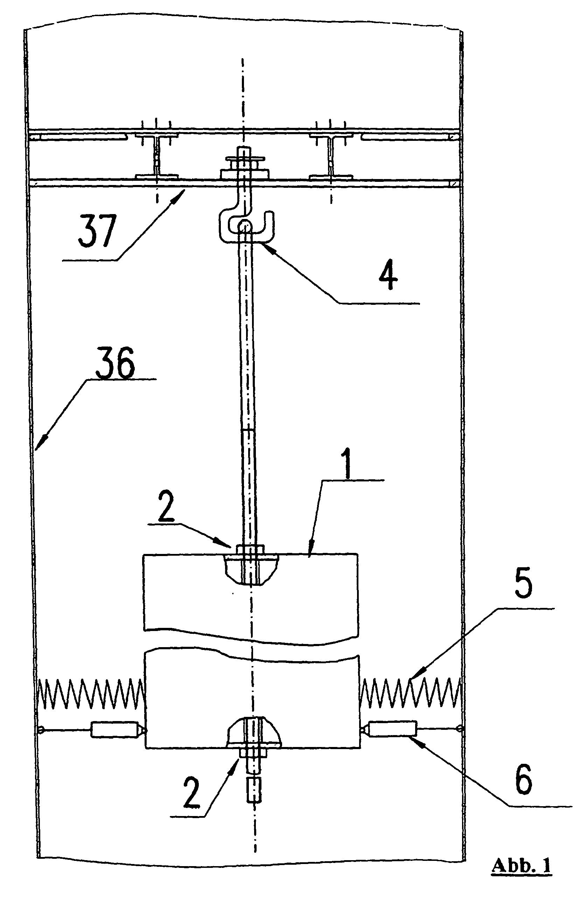

Es wurde nun gefunden, daß Schwingungstilger, bestehend im wesentlichen aus Schwungmasse, Pendel (Stab/Rohr) und einer Dämpfungseinheit innerhalb einer bestimmten konstruktiven Anordnung die oben aufgezählten Probleme, insbesondere bei ihrer Verwendung in großen Windkraftanlagen mit einer Eigenfrequenz zwischen 0,1 und 30 Hertz in hervorragender Weise lösen können. Dabei hat sich gezeigt, daß besonders gute Ergebnisse erzielt werden, wenn die Dämpfungseinheit (40) an der Pendelstange (3) im Bereich des Pendellagers bzw. Pendelgelenks (4) angebracht ist. Derartige Schwingungstilger haben bei einer Reihe von Verwendungen Vorteile gegenüber solchen Tilgern, bei denen die Dämpfungs- / Federungselemente direkt an der Schwungmasse (1) unter Zuhilfenahme der Turmwände (36) angebracht sind (Abb. 1). Insbesondere haben derartige Schwingungstilger nicht erwartete ausgezeichnete Dämpfungseigenschaften in Windkraftanlagen mit ihren oben beschriebenen komplexen Schwingungsverhältnissen. Überdies besitzen sie aufgrund ihrer kompakten, Platz sparenden Bauweise konstruktive Vorteile gegenüber bekannten für normale Bauwerke eingesetzte Tilger. Da in Windkraftanlagen im Gegensatz zu hohen Schornsteinen oder hohen Telegraphenmasten eine Vielzahl von Versorgungsleitungen aus dem Maschinenhaus durch den üblicherweise sehr engen Querschnitt des Turms geführt werden müssen, sind üblich gedämpfte Tilger, deren Dämpfungsmittel mit den Turmwänden unmittelbar in Berührung stehen und somit wertvollen Platz wegnehmen, für besagte Windkraftanlagen kaum geeignet.

Gegenstand der Erfindung ist somit ein Schwingungstilger, geeignet zur Dämpfung von Schwingungen in Windkraftanlagen, bestehend im wesentlichen aus Schwungmasse, Pendelstange, Pendellager bzw. -gelenk und Dämpfungsmitteln, wobei Schwungmasse, Pendellänge und Stärke der Dämpfungsmittel auf die physikalischen Eigenschaften der Windkraftanlage in der Weise angepaßt sind, daß die Schwungmasse im Vergleich zum Bauwerk phasenverschoben schwingt, der dadurch gekennzeichnet ist, daß die Dämpfüngsmittel (40) zusammen mit dem Pendelgelenk (4) eine baulich abgeschlossene Einheit bilden und im wesentlichen aus einem oder mehreren, vorzugsweise vier Elastomermodulen (7) bestehen, wobei der Tilger in beliebige Richtungen einer Ebene beschleunigt werden kann.

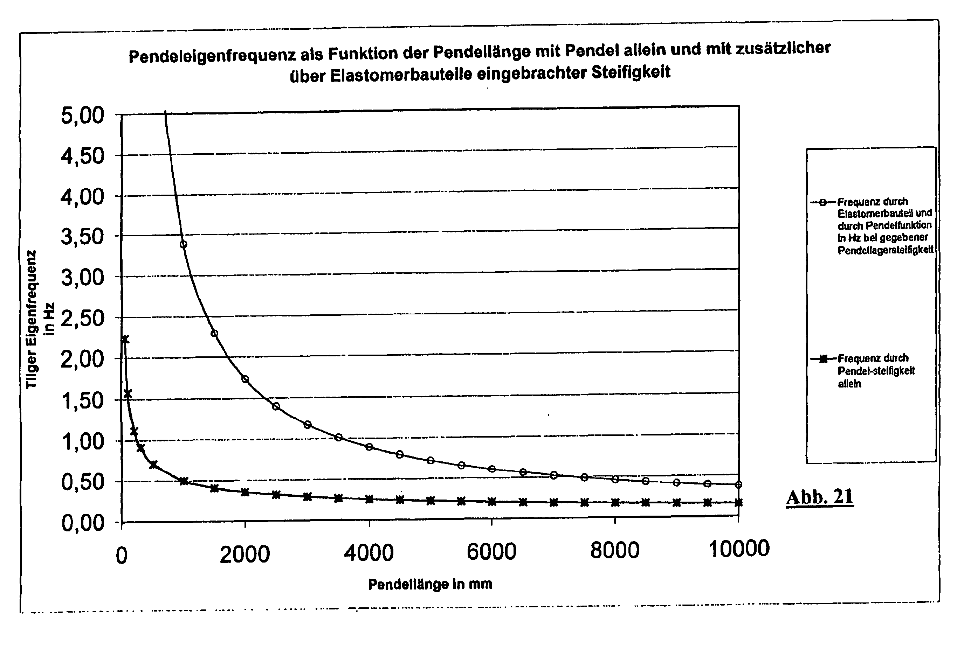

Die Dämpfung durch elastische Elemente ist auch erforderlich um höhere Pendeleigenfrequenzen zu erreichen als dies bei der durch die natürliche Schwerkraft vorgegebene Pendelfrequenz der Fall ist. Bei höheren Frequenzen > ca. 1Hz würde sonst die Pendelstange zu kurz werden um die Masse aufnehmen zu können (Abb. 21).

Die Elastizität kann in unterschiedlichen Richtungen innerhalb der Schwingebene der Masse unterschiedliche Steifigkeiten aufzeigen, so daß in x-, y- Richtung unterschiedliche Eigenfrequenzen des Tilgers entstehen. Die Steifigkeit der Elastomere (7) kann dabei erfindungsgemäß durch Verwendung von Distanzscheiben (8) innerhalb der Dämpfungsmittel reguliert werden.

Der erfindungsgemäße Schwingungstilger kann zusätzlich zu den Elastomermodulen hydraulische oder mechanische (z.B. Federdämpfer) besitzen, wie sie im Stand der Technik an sich bekannt sind. Gegenstand der Erfindung ist somit auch ein entsprechender Schwingungstilger, der dadurch gekennzeichnet ist, daß er zusätzliche Dämpfungsmittel hydraulischer Art (17) oder mechanischer Art (5), (6) aufweist. Die zusätzlichen Dämpfungsmittel sind vorzugsweise konstruktiv so angebracht, daß sie wenig Platz beanspruchen.

Bevorzugt sind solche Schwingungstilger, bei denen die Dämpfungsmittel (40) im wesentlichen aus drei bis sechs Elastomermodulen (7), die vorzugsweise um das Pendelgelenk (4) herum angeordnet sind, und ggf. einem oder mehrere hydraulischen Module bestehen, wobei besagte hydraulische Module in verschieden bevorzugten Ausführungsformen der Erfindung zusammen mit den Elastomerbauteilen in passiver, halb-aktiver oder aktiver, daß heißt, durch Fremdenergie betriebener Weise betrieben werden können.

Gegenstand der Erfindung ist außerdem ein entsprechender Schwingungstilger, dessen Pendelstange (3) selbst so dämpfend elastisch ist, daß sie die Dämpfungseinheit (40) in einem gewissen Umfang zu ersetzen oder bei gleicher Ausgestaltung zu verstärken vermag, wobei insbesondere solche Pendel geeignet sind, welche aus elastomeren Bauteilen oder Geflechten aus Draht und / oder Kunststoff gefertigt sind und gegebenenfalls einen unterschiedlichen Elastizitätskoeffizienten in x- und y- Richtung durch beispielsweise im Querschnitt unterschiedliche Materialien und / oder ein unsymmetrisches Profil aufweisen. Mit derartigen Schwingungstilgern können gleichzeitig mehrere Frequenzen in unterschiedlichen Richtungen getilgt werden.

Gegenstand der Erfindung sind außerdem Schwingungstilger, bei denen die Schwungmasse (1) in einigen Ausführungsformen aus Massenteilen besteht, so daß entsprechend den physikalischen Voraussetzungen des Bauwerks die Masse angepaßt werden kann. In anderen Ausführungsformen dient ein Behälter als Schwungmasse, welcher verschiedene unterschiedlich schwere Gegenstände, zum Beispiel Schüttgut, oder Bauteile der Windkraftanlage selbst aufzunehmen vermag.

Die erfindungsgemäßen Schwingungstilger weisen vorzugsweise eine in Längsrichtung angeordnete zentrische Lochbohrung (durch Schwungmasse, Pendelstange, Dämpfungselement) auf, die beispielsweise eine Kabeldurchführung ermöglicht.

Die erfindungsgemäßen Schwingungstilger werden vorzugsweise in Windkraftanlagen, insbesondere in solche, welche eine Eigenfrequenz zwischen 0,1 und 30 Hertz, vorzugsweise zwischen 0,2 und 10 Hertz aufweisen, eingebaut.

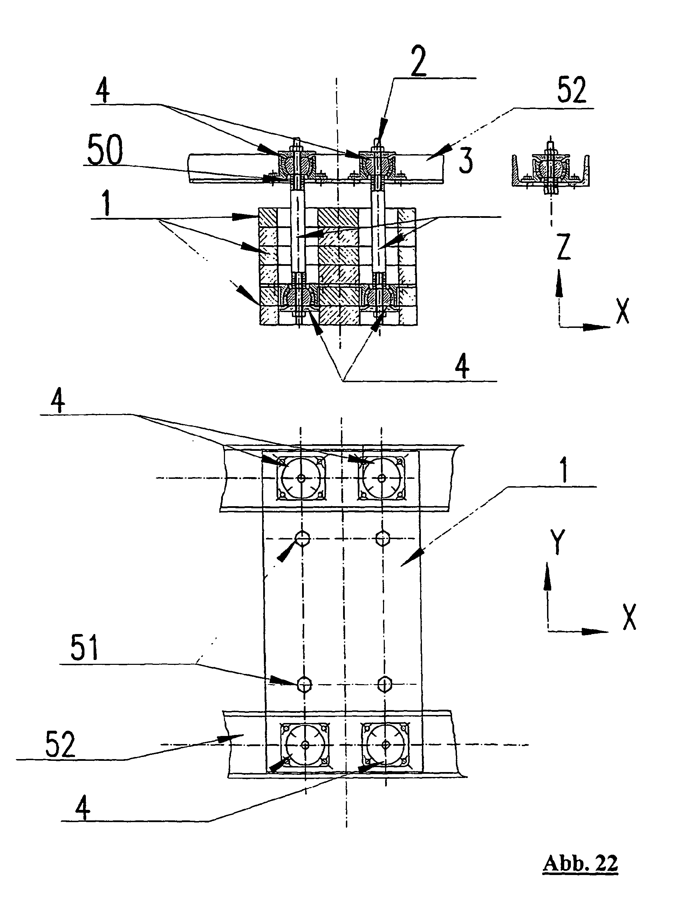

Überraschend wurde gefunden, daß die Dämpfungseigenschaften von Schwingungstilgern der erfindungsgemäßen Bauart weiterhin verbessert werden können, insbesondere bei schwierigen und komplexen Schwingungsverhältnissen im zu dämpfenden Bauwerk, wenn der Schwingungstilger mehrere, vorzugsweise zwei bis vier, Pendelstangen aufweist, welche die Pendelmasse (1) tragen. Ein derartiger Tilger weist zwei Pendelgelenke (4) für jede Pendelstange auf (Abb. 22). Dabei können elastische Dämpfungsmittel (40) an nur einem oder an beiden Pendelgelenken jeder Pendelstange vorhanden sein. Durch die Anordnung mehrerer Pendelstangen schwingt die Masse in der Ebene parallel zur Aufhängungsfläche (Parallelverschiebung).

Gegenstand der Erfindung sind letztlich Windkraftanlagen, in welchen die erfindungsgemäßen Schwingungstilger eingebaut sind. Dabei können die Schwingungstilger in bevorzugten Ausführungsformen entweder innerhalb des Turmes (36) unterhalb des Maschinenhauses (39) oder am oder im Maschinenhaus außerhalb des Turmes angebracht sein.
Letzteres ist vor allem dann vorteilhaft, wenn die Gondel bzw. das Maschinenhaus, was zumeist der Regelfall ist, in horizontaler Richtung drehbar ist. In diesem Fall wirkt der Schwingungstilger zusätzlich dämpfend bzw. bremsend im Hinblick auf die Drehbewegung der Gondel.

In einer besonderen Ausführungsform kann der erfindungsgemäße Tilger auch "verkehrt" herum in die Anlage eingebaut werden, daß heißt die Pendelmasse befindet sich oberhalb der Trägerkonstrukion für den nun nicht mehr hängenden Tilger.

Windkraftanlagen, die mit den erfindungsgemäßen Schwingungstilgern ausgerüstet sind, arbeiten somit besonders materialschonend und ruhig und tragen daher auch zu einer verringerten Umweltbelastung bei.

Im folgenden wird die Erfindung genauer beschrieben:

Dabei haben die Zeichnungselemente die folgende Zuordnung und Bedeutung

| | | | |
|---|---|---|---|
| (1) | Tilgermasse | (2) | Masse Verstellung |
| (3) | Pendelstange | (4) | Pendelgelenk |
| (5) | Zusatzfedern | (6) | Zusatzdämpfer |
| (7) | Elastomerbauteile | (8) | Distanzscheiben zur Elastomertilgereinstellung |
| (9) | Innenteil Elastomer Pendellager | (10) | Elastomerbauteil Pendelstange |
| (11) | Innenrohr Elastomer Pendellager | (12) | Außenrohr Elastomer Pendelstange |
| (13) | Hydraulik Flüssigkeit oder Gas | (14) | Hydraulik Leitung |
| (15) | Verdrängungsraum | (16) | Drosselventil |
| (17) | Hydraulik Elastomerlager | (18) | Beschleunigungsaufnehmer im Turm / Mast |
| (19) | Rechner | (20) | Verstärker |
| (21) | Ventil Ansteuerung, magnetisch / motorisch | (22) | Hydraulik Pumpe |
| (23) | Sendeantenne | (24) | Empfänger |
| (25) | Hydraulik Speicher | (26) | Hydraulik Steuerung |
| (27) | Hydraulik Zylinder einfach wirkend | (28) | Hydraulik Zylinder 2 - fach wirkend |
| (29) | Hydraulik Zylinder mit Federunterstützung | (30) | Hydrolager |
| (31) | Luftfeder | (32) | Magnetantrieb |
| (33) | Motorantrieb | (34) | Exzenterantrieb |
| (35) | Rotorblatt | (36) | Turm |
| (37) | Tilger-Tragekonstruktion | (38) | Durchgangsloch |
| (39) | Maschinenhaus (Gondel) | (40) | Gesamtes Dämpfungseinheit |
| (41) | Azimutlager | (42) | Flansch zum Befestigen d. Tilgers |
| (43) | Flansch zum Befestigen der Schwungmasse | (44) | Pendelstange aus Drahtseilgeflecht |
| (45) | Pendelstange aus Elastomerenbauteilen | (46) | Kraft des Antriebes auf Tilgermasse |
| (47) | Reaktionskraft auf Turm u. Gondel | (48) | Reaktionskraft auf zu tilgendes Bauteil |
| (49) | Hydraulik Ansteuerdruck auf Stellglied | (50) | Distanzscheiben für Pendelstange |
| (51) | Verschraubung Pendelmasse | (52) | Befestigungskonstruktion |

Die Abbildungen stellen folgendes dar:
- Abb.1:: Schwingungstilger im Turm, freischwingend aufgehängt Federung (5) und Dämpfung (6) durch Abstützung an der Turmwand;
- Abb. 2:: Schwingungstilger mit Dämpfungseinheit (40) im Turm hängend;

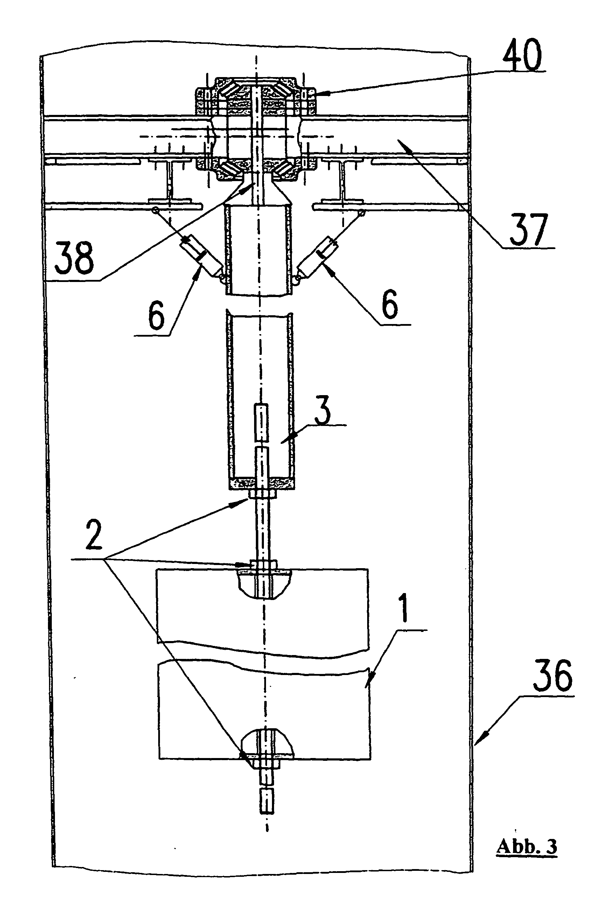

- Abb. 3:: Schwingungstilger mit Feder-Elastomer-Dämpfungseinheit (40) an Tragekonstruktion (37) und externen (Hydraulik)-Zusatzdämpfern (6), Steifigkeit (5) des Pendelgelenks einstellbar;
- Abb. 4:: Schwingungstilger mit (passiver) Hydraulik-Elastomer-Dämpfungseinheit;
- Abb. 5:: Schwingungstilger außerhalb des Turmes (36) an Gondel hängend und mit Azimut rotierend;
- Abb. 6:: Windkraftanlage mit schwingendem Turm (36) und Schwingungstilger unmittelbar unterhalb des Maschinenhaus (39) angebracht, Schwingungsbauch oben (Schwingung 1. Ordnung);

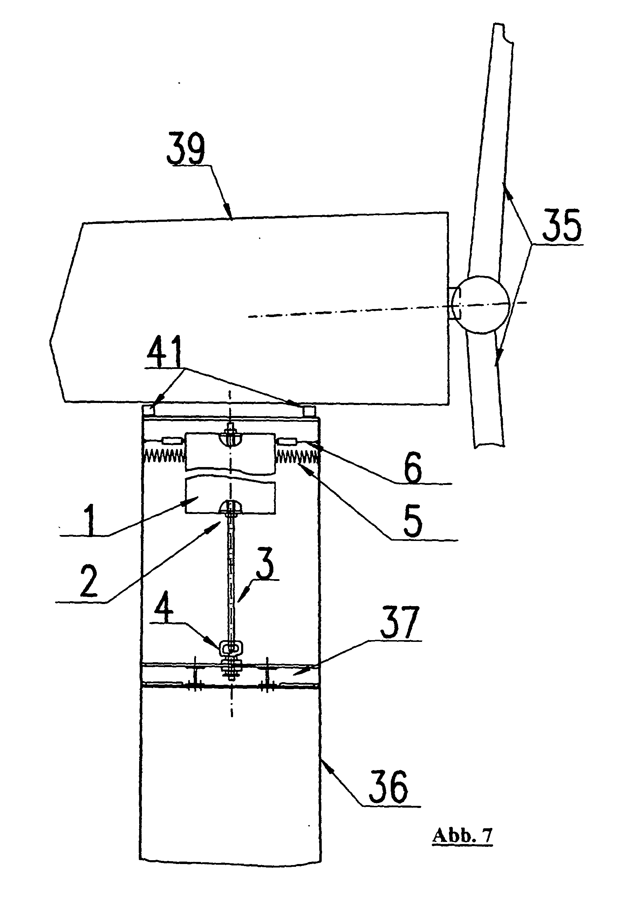

- Abb. 7:: Schwingungstilger im Turm, Schwungmasse (1) nach oben zeigend;
- Abb. 8:: Windkraftanlage mit schwingendem Turm (36) und Schwingungstilger im, Schwingungsbauch Mine des Turms (Schwingung höherer Ordnung) angebracht;
- Abb. 9:: Schwingungstilger mit Dämpfungseinheit bestehend aus einer Pendelstange aus Drahtseilgeflecht (44), befestigt im Turm (36) innerhalb des Maschinenhauses (39);

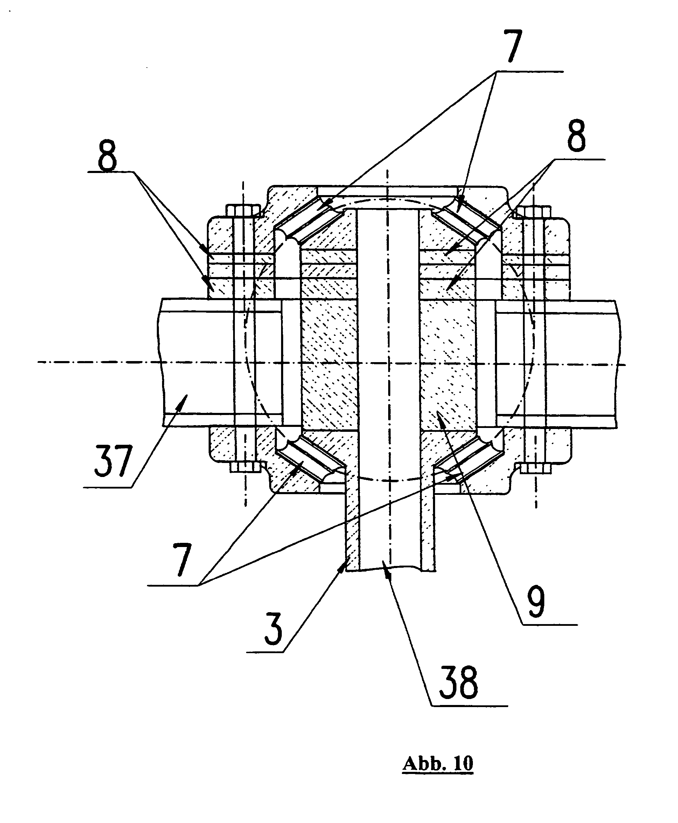

- Abb. 10:: Dämpfungseinheit (40) mit Elastomerelementen (7) sowie Tilgertragekonstruktion (37) und Durchgangsloch (38);
- Abb. 11:: Tilgerstange aus (versetzt) aneinander gereihten hochdämpfenden Elastomerbauteilen (Ultrabuchsen);
- Abb. 12:: Rohr-Tilgerstange aus hochdämpfenden Drahtseilgeflecht (Reibungsdämpfung);
- Abb. 13:: Schwingungsverhalten eines ungedämpften Systems;
- Abb. 14:: Schwingungsverhalten eines gedämpften Systems;

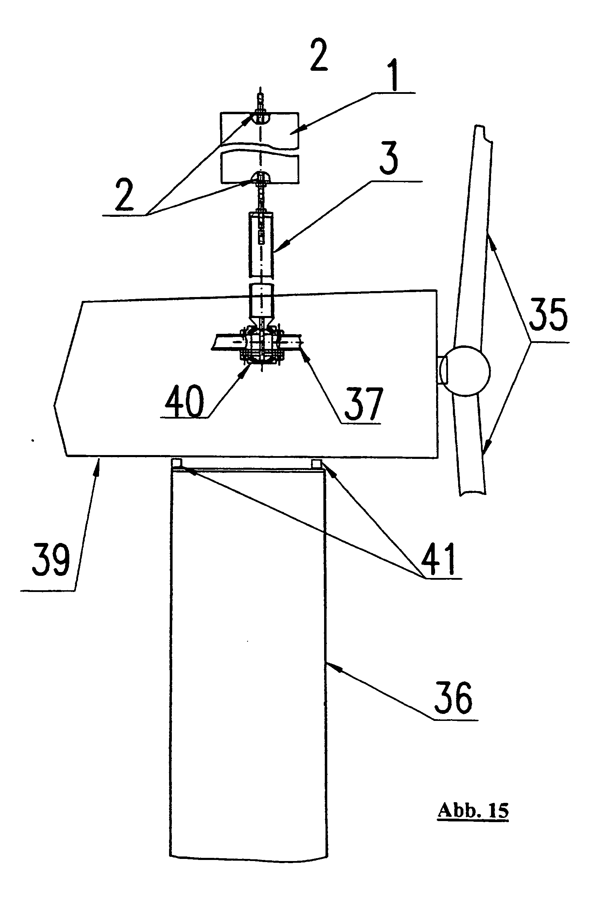

- Abb. 15:: Schwingungstilger im Maschinenhaus (3) drehend gelagen, Masse nach oben zeigend, aus Gondel herausragend;

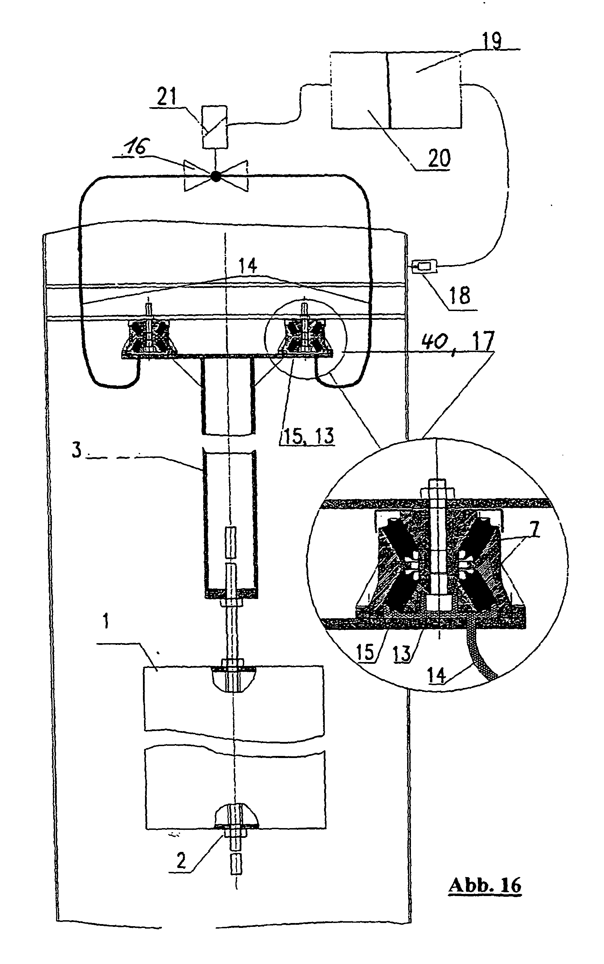

- Abb. 16:: halb aktiver Schwingungstilger zur Schwingungstilgung am Turm mit Hydraulik-Elastomer-Dämpfüngseinheit mit elektronischer Ansteuerungs- und Rechnereinheit;

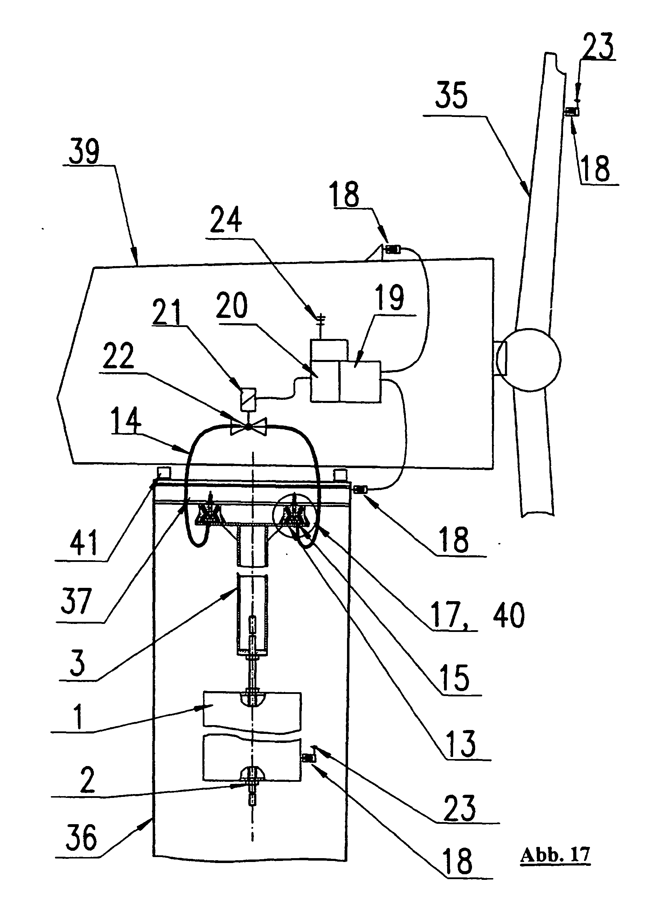

- Abb. 17:: halb-aktiver Schwingungstilger in einer Windkraftanlage zur Schwingungstilgung an Rotor und Turm mit Hydraulik-Elastomer-Dämpfungseinheit mit elektronischer Ansteuerungs- und Rechnereinheit;
- Abb. 18:: aktiver Schwingungstilger mit Pumpe/Kompressor (22) in einer Windkraftanlage mit Hydraulik-Elastomer-Dämpfiingseinheit mit elektronischer Ansteuerungs- und Rechnereinheit
- Abb. 19:: passive und aktive Dämpfungselemente;
- Abb. 20:: Wirkungs- / Funktionsweise eines in einer Windkraftanlage arbeitenden Schwingungstilgers.
- Abb. 21:: Diagramm Tilgereigenfrequenz in Hz in Beziehung zur Pendellänge.
- Abb. 22:: Dämpfungselement eines Schwingungstilgers in Seiten - und Aufsicht, welches zwei Pendelstangen mit insgesamt vier elastischen Pendelgelenken aufweist.

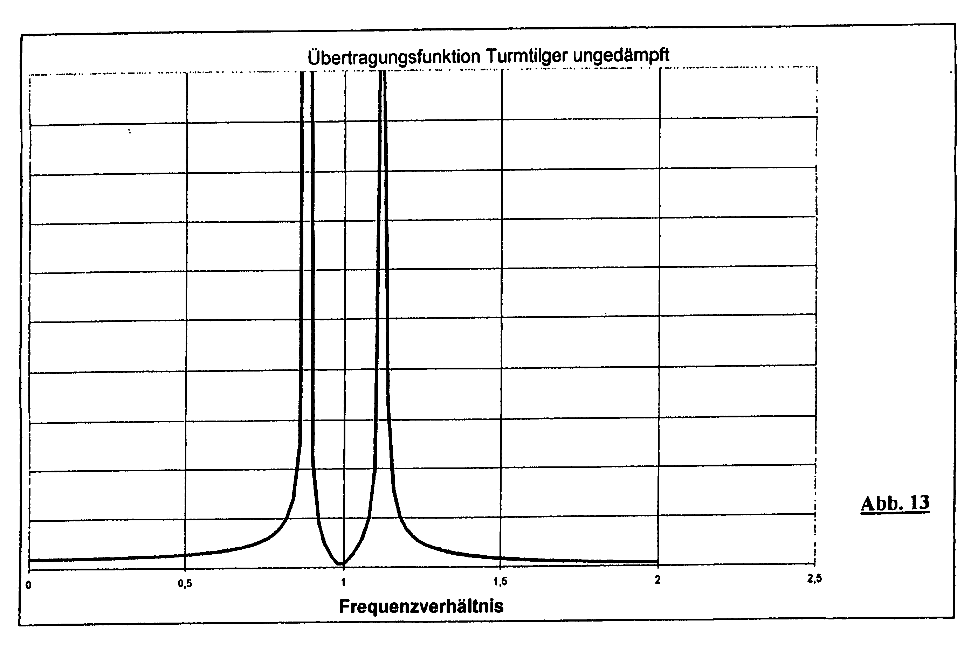

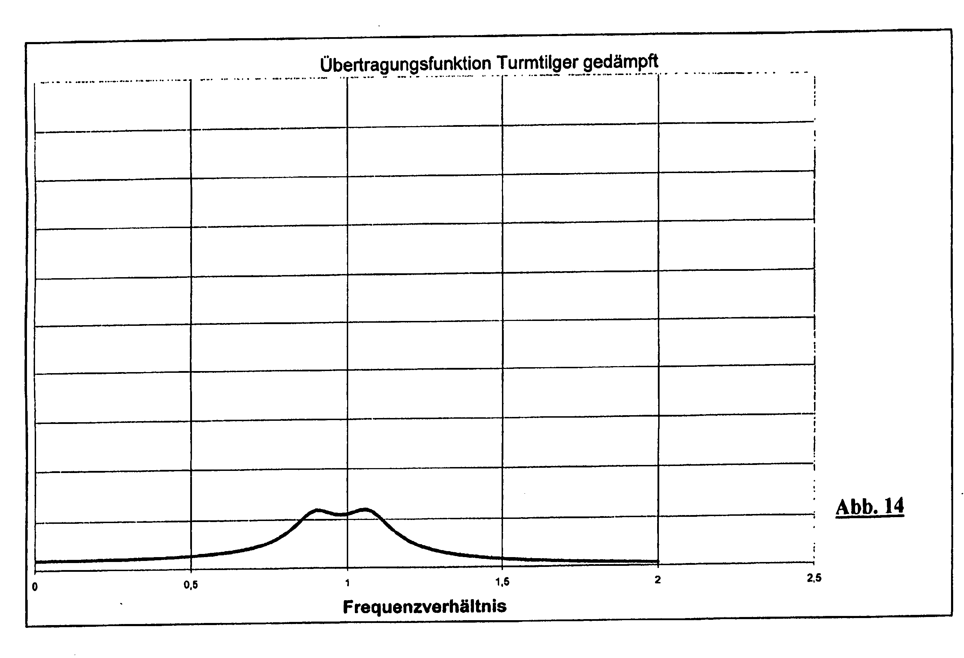

Die erfindungsgemäßen Schwingungstilger bestehen vorzugsweise aus einem gedämpften Feder-Masse System, welches auf die jeweilige Turmfrequenz abgestimmt ist und damit phasenverschoben zum Turm schwingt. Die Gegenschwingung der Tilgermasse reduziert die Turmschwingung.
Die Schwingungstilger können auf unterschiedliche Weise gedämpft werden.
Wäre der Schwingungstilger ungedämpft, so würde zwar die Eigenschwingung des Turmes nahezu gänzlich unterdrückt. Die aber bei einem solchen Tilgersystem entstehenden typischen zwei neuen Schwingungspeaks würden sich negativ auf das Schwingungsverhalten des Turmes auswirken. Abb. 13 und 14 zeigen die Übertragungsfunktion eines ungedämpften und eines gedämpften Schwingungstilgers.
Durch die zusätzliche Dämpfung wird dem sonst annähernd ungedämpften System Energie entzogen, so daß die beiden aufgezeigten typischen Resonanzerscheinungen zwar entstehen, aber durch die Dämpfung auf ein Maß soweit reduziert werden, daß das Schwingverhalten des Turmes kaum beeinflußt wird.

Schwungmasse, Eigenfrequenz und Dämpfungsgrad können nach den jeweils vorliegenden physikalischen Grundlagen optimal eingestellt werden.

Um die Toleranzen der Massen, Steifigkeiten und Eigenfrequenzen, die bei der Fertigung von Windkraftanlagen naturgemäß streuen, ausgleichen zu können, können die Schwingungstilger einstellbar gefertigt und an die jeweilige Windkraftanlage angepaßt werden.
Insgesamt sind folgende Größen einstellbar: Masse, Pendellänge, Steifigkeit der elastischen bzw. elastisch dämpfenden (Feder-) Elemente, Dämpfüngscharakteristika.

Der Schwingungstilger kann in mehreren Varianten ausgeführt werden, welche zum Teil auch in den Abbildungen dargelegt sind (siehe Abbildungs-Legenden oben).

Der erfindungsgemäße Schwingungstilger kann prinzipiell in zwei Varianten im Bauwerk befestigt werden, und zwar als Pendeltilger im Turm, freischwingend aufgehängt mit optionaler zusätzlicher Federung und Dämpfung durch Abstützung an der Turmwand.
Weiterhin kann er als Schwingungstilger, der im Turm mit an der Turmwandung befestigter Tragekonstruktion (37) oder direkt unten am Maschinenhaus aufgehängt ist und dessen Pendel keinen Kontakt zur Turmwandung hat, betrieben werden. Diese Auführungsform ist bevorzugt, insbesondere dann, wenn aus Platzgründen der Kontakt zur Turmwand unerwünscht ist.

Erfindungsgemäß kann der Schwingungstilger auch zusätzlich an einem Haken fixiert werden, der bei hängender Bauweise auch Teile des Gewichts mit aufnimmt.
Die Masse des Tilgergewichts (1) kann fest oder einstellbar sein.
Die Schwungmasse (1) kann Schüttgutbehälter mit einstellbarem Gewicht durch mit Schüttgut füllbare Hohlräume sein. Dabei ist es möglich, auch verschiedene Schüttgüter und oder Flüssigkeiten miteinander zu mischen oder auch Stückgüter mit einzubringen. Der Behälter kann aus Stahl oder Kunststoff oder Beton hergestellt werden. Die Einstellbarkeit des Gewichtes kann durch unterschiedliche Volumengewichte der Schüttgüter erreicht werden oder auch durch den unterschiedlichen Füllgrad der verwendeten Behälter. Das Gewicht kann eine Aussparung, im Bereich der im Turm befindlichen Leiter enthalten, damit der bisher im Turm übliche Aufstieg nicht durch den Tilger gefährdet wird.
Die Schwungmasse kann auch aus Einzelmassen zusammengesetzt sein in der Form, daß mehrere Scheiben mit mittiger Bohrung übereinandergestapelt werden. Die mittige Bohrung dient der Aufnahme der Pendelstange (3). Das Gewicht ist durch die Anzahl, Dicke und Werkstoff der Einzelelemente einstellbar.
Als Ergänzung der Belastungsgewichte können zusätzlich oder alternativ Bauteile der Windkraftanlagen wie Hydraulikaggregate, und elektrische Einrichtungen als Tilgermasse eingesetzt werden.
Die Höheneinstellbarkeit (2) der Schwungmasse (1) und damit die Frequenzeinstellung des Schwingungstilgers wird durch Gewindespindel, Kette mit unterschiedlich einzuhängenden Gliedern oder stufenlos über Kauschen einstellbare Seile erreicht.

Die Pendelmasse kann bei Bedarf eine Bohrung zur Aufnahme der Kabeldurchführung (38) erhalten.

Das im oberen Turmbereich frei hängende Leistungskabel führt bei Azimutbewegung eine Relativbewegung zum Turm und damit zum Schwingungstilger aus. Bei Anbindung des Schwingungstilgers in Höhe der drehenden Leistungskabel ist es notwendig, das Kabel durch den Schwingungstilger hindurchzuführen. Dazu wird der Schwingungstilger, die Tilgeraufhängung und die Tilgerstange hohl ausgeführt.

Bei Einsatz eines senkrecht hängenden Schwingungstilgers in Form eines Pendels spielt die Erdanziehungskraft eine nicht zu vernachlässigende Rolle. Sofern keine zusätzlichen Federn eingesetzt werden, wird die Eigenfrequenz des Schwingungstilgers durch die Erdanziehungskraft bestimmt und damit ausschließlich durch die Länge der Tilgerstange und die Gewichtsverteilung des Pendels auf der Tilgerstange bestimmt. Zur exakten Einstellung der Eigenfrequenz kann zum einen die Masse Pos 1 des Schwingungstilgers verändert werden, zum anderen kann die Pendellänge Pos 3 verändert werden.

Durch den Einsatz von zusätzlichen Federelementen wird die Eigenfrequenz des Schwingungstilgers von der Pendellänge und zusätzlich von der Federsteifigkeit der Federelemente bestimmt. Durch diese Anordnung kann die Pendellänge frei bestimmt werden. Die Pendellänge wird bei solchen Elementen zwischen 0,1m und 15m betragen. Besonders bei höheren Frequenzen von >1 Hz kann dieses System notwendig sein, da die Pendellänge sonst zu kurz wäre, um die notwendige Masse zu plazieren. Die Federn werden zwischen Schwingungstilger und Turm angeordnet. Dabei können diese sowohl zwischen Turmwand und Masse oder Turmwand und Pendelstange, oberhalb der Masse sowie unterhalb der Masse mit dem Pendel verbunden sein.

Erfindungsgemäß ist der Begriff "Feder" in seiner weitesten Bedeutung zu verstehen.
Eingeschlossen sind in diesen Begriff alle solche Bauelemente, die vorrangig aufgrund ihrer federnden und elastischen Funktion eingesetzt werden können. Der Bergriff Feder umschließt also erfindungsgemäß Werkteile wie Spiralfedern, Biegestäbe, Blattfedern, Elastomere, Drahtseilfedern und ähnliches.

Um die bei der Tilgerfunktion neu entstehenden beiden Frequenzen möglichst klein zu halten ist es sinnvoll den Schwingungstilger zu dämpfen. Abb. 13, 14 zeigt den Unterschied der Turmauslenkung mit gedämpftem und ungedämpftem Schwingungstilger.

Der Schwingungstilger kann dämpfende und elastische Funktion gleichzeitig besitzen.
Beide Funktionen können mit zwei verschiedenen Bauteilen, oder mit einem Einzelbauteil, welches beide Funktionen beinhaltet realisiert werden. Dies können z.B. Elastomerbauteile mit entsprechenden Dämpfungseigenschaften, Drahtseilfedern, oder auch elastische, ungedämpfte Federn in Verbindung mit integrierten oder separat angebrachten zusätzlichen Dämpfern sein. Die Elemente können an unterschiedlichen Stellen zwischen dem zum Turm beweglichen Schwingungstilger und mit dem Turm verbundenen Bauteilen, welche die Schwingbewegung des Turmes ausführen angebracht werden.

Vorzugsweise werden die erfindungsgemäßen Schwingungstilger unabhängig von der Turmwand betrieben, da keine seitlichen Befestigungen erforderlich sind. Die gesamte Anschlußkonstruktion ist im Pendelgelenk integriert. Sie können senkrecht hängend, horizontal, senkrecht stehend und in allen sonstigen Raumachsen betrieben werden.
Dadurch entsteht der Vorteil, daß dieser an jedem Ort befestigt werden kann und die Tilgerkräfte lediglich am Aufhängpunkt übertragen werden, d.h. der Tilger kann am sich gegen den Turm drehenden Maschinenhaus befestigt werden und gleichzeitig in den stationären Turm hineinragen ohne diesen zu berühren. Er kann aber auch zusätzlich an der Turmwand angekoppelt werden.

Die Steifigkeit des im oberen Pendelgelenk angeordneten Elastomerbauteils (7) kann durch Variation des Abstandes der Gummielemente einstellbar gestaltet werden. Durch die Verstellung der Steifigkeit wird die erforderliche Pendellänge so variiert, daß die von der spezifischen Masse und von der Turmabmessung ideale Pendellänge nahezu unabhängig von der sonst durch die Erdanziehungskraft vorgegebenen Pendellänge realisiert werden kann. Das Bauteil besteht aus zwei gegeneinander verspannten rotationssymmetrischen kegelförmigen Elastomerbauteilen (7). Die Elastomerbauteile können auch sphärisch, konvex oder konkav oder auch in Form von Zylindern mit Mittelbohrung ausgeführt sein. Das verwendete Elastomermaterial hat eine hohe Dämpfung mit einem Dämpfungswinkel zwischen 8° und 25°, vorzugsweise zwischen 12° und 18°. Die kardanische Steifigkeit der Elemente ist abhängig von dem Abstand zwischen den Konuselementen.
Dieser Abstand und damit die Steifigkeit wird durch einlegen zusätzlicher Distanzscheiben (8) höher, bzw. durch entfernen oder verringern von Distanzscheiben Meiner. Zur Durchführung der Versorgungskabel kann die Pendelstange (3), das sich an die Pendelstange anschließende Innenteil und die Distanzscheiben mit einer Bohrung ausgeführt werden.
Zur Einstellung von unterschiedlichen Steifigkeiten und damit unterschiedlicher Eigenfrequenzen in x- und y- Richtung können die Elastomerbauteile mit symmetrisch oder unsymmetrisch am Umfang der Elastomerkörper angeordneten Fenstern (Aussparungen am Elastomerkörper) ausgeführt werden.

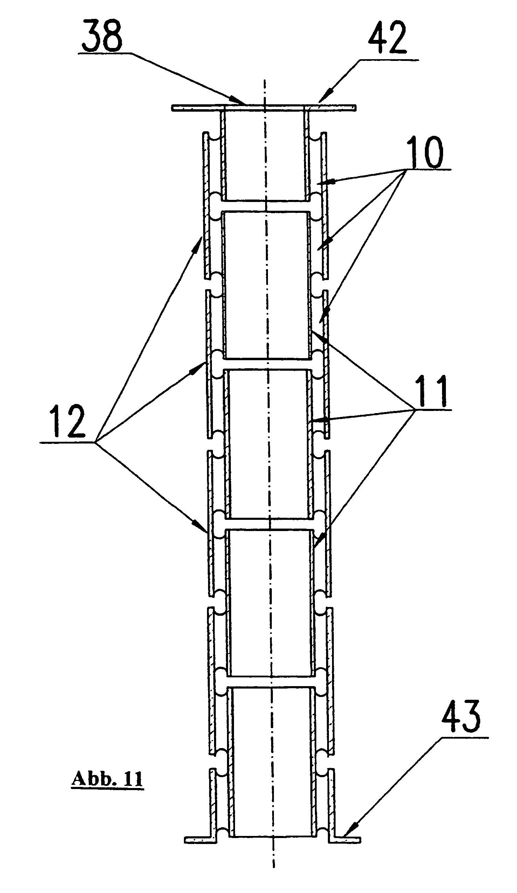

Die für die Tilgerfunktion erforderliche Dämpfung wird durch das verwendete Elastomermaterial aufgebracht. Ergänzend oder alternativ dazu können zusätzliche Hydraulikdämpfer eingesetzt werden. Diese können entweder separat angeordnet werden Abb. (3),(6) oder auch in mehrere Elastomerbauteile integriert werden. Vorteil dieses Systems ist, daß es freihängend angeordnet werden kann, d.h. ohne Verbindung zum Turm drehbar im Maschinenhaus angeordnet ist und somit bei Windrichtungsänderung der am rotierenden Maschinenhaus befestigte Tilger den Turm nicht berührt. Weiterhin entsteht keine Relativbewegung in Torsionsrichtung zwischen Schwingungstilger und Kabel. Bei dieser Ausführung kann das Kabel sowohl durch die mittig hohle Tilgerkonstruktion geführt werden oder seitlich an der Tilgerkonstruktion vorbeigeführt werden.
Eine weitere Ausführung ist durch den Einsatz einer an der Gondel befestigten elastischen Pendelstange (Abb. 11), welche aus hochdämpfendem Material besteht, möglich. Diese besteht aus mehreren hintereinandergereihten, rohrförmigen Elastomerbauteilen.. Bei denen eine Gummischicht (10) zwischen zwei Rohre mit unterschiedlichen Durchmessern eingebracht ist. Diese sind nach Abb. 11 so gestaltet, daß abwechselnd das Innenohr (11) und das Außenrohr (12) verbunden sind, so daß die Verformung bei der Verbiegung der daraus entstehenden Stange über das Elastomer in Form einer kardanischen Bewegung erfolgt. Die Elastomerbauteile können zylindrisch, konisch und sphärisch (konvex und konkav) ausgeführt werden.

Die Pendelstange selbst kann als massive Stange oder auch als Rohr zur Aufnahme der Leistungskabel ausgebildet sein. Als gedämpfte Pendelstange kann alternativ ein Stahlseil, welches aus vielen miteinander verbundenen (verflochtenen) Längselementen besteht, eingesetzt werden. Die Einzelfasern können rund, vieleckig oder flach ausgeführt sein. Die Dämpfung dieser Elemente erfolgt durch Reibung zwischen den Drähten. Alternativ kann ein dämpfendes Elastomer zwischen den Längselementen eingebracht werden so daß die Dämpfung durch Schub in dem eingebrachten Zwischenelement erfolgt.

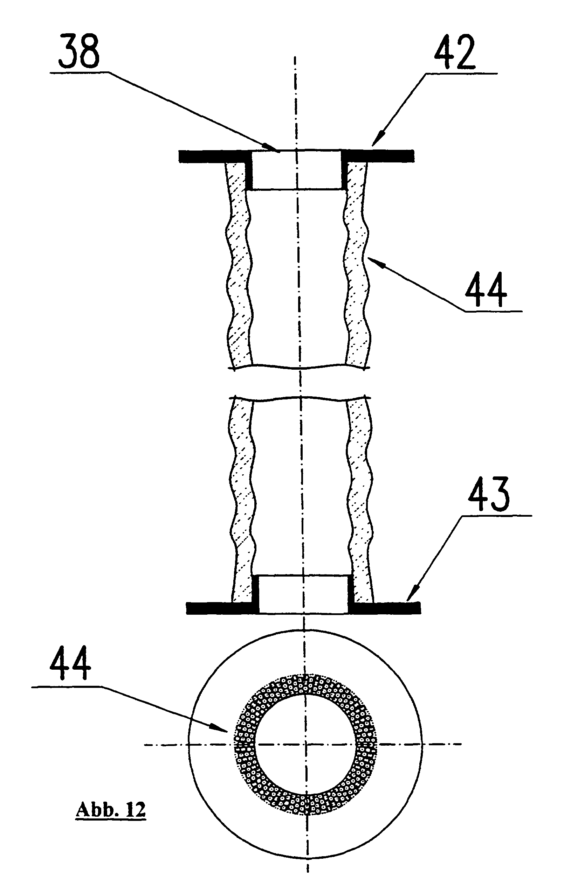

Zur Aufnahme der Kabel können die verwundenen Seile (Abb. 12) um ein elastisches Rohr (Schlauch) geführt werden, welcher die Kabelleitungen aufnehmen kann. Darüber hinaus können die Kabelleitungen als tragende und als dämpfende Elemente mit verwendet werden. Die Pendellänge kann durch starre Elemente verlängert werden.

Weiterhin kann die Pendelstange aus einem unsymmetrischen Profil hergestellt werden, so daß diese eine unterschiedliche Steifigkeit in x- y Richtung aufweist und somit zwei unterschiedliche Frequenzen getilgt werden können. Auch durch die Verwendung unterschiedlicher Materialien kann ein entsprechender Effekt erzeugt werden.

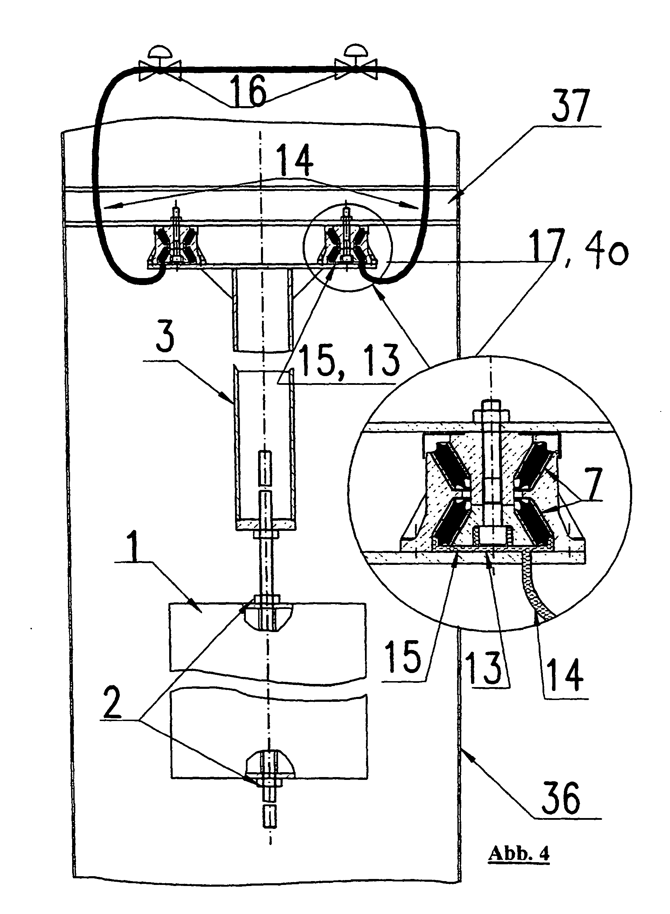

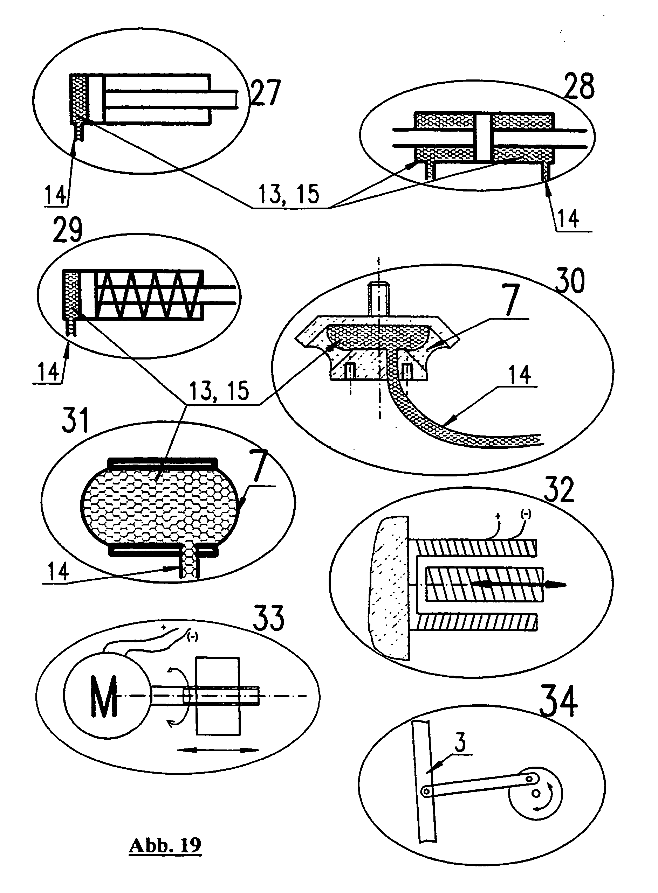

Erfindungsgemäß können auch hydraulisch gedämpfte Schwingungstilger eingesetzt werden. Hierzu können Hydraulikdämpfer bei denen die Dämpfung durch Flüssigkeitsreibung oder auch durch Luftreibung aufgebracht wird verwendet werden. Weiterhin sind Hydraulik-Elastomer Lager wie in Abb. 4 (17) und Abb. 19 (30) dargestellt möglich. Bei diesen Systemen ist in einem Verdrängungsraum (15) eine Hydraulikflüssigkeit (13) oder Gas eingebracht. Bei Bewegung des Pendels wird das Volumen des Verdrängungsraumes (15) verändert, so daß das Medium (13) in - oder aus dem Verdrängungsraum gepumpt wird. Die Dämpfung wird nun erreicht, indem das Medium jeweils durch eine einstellbare oder auch fest eingestellte Drossel (16) geleitet wird. An der Drossel wird das Medium gebremst, d.h. es wird dem System Energie entzogen. Somit erfährt das Pendel eine einstellbare Dämpfung. Das System kann wie in Abb. 4 dargestellt, so aufgebaut sein, daß jeweils zwei oder auch mehr Elemente mit einer Leitung verbunden sind.
Alternativ kann jedes Element in Verbindung mit einem Vorratsgefäß, in welches die beim Einfedern überschüssige Flüssigkeit gepumpt werden und von dem das beim Ausfedern fehlende Volumen wieder entnommen werden kann, einzeln gedämpft werden. Dieses Vorratsgefäß kann auch für mehrere Ventile verwendet werden.

Die Anzahl der hydraulischen Dämpfungselemente kann von einem Element (in Verbindung mit einem Kardan-Gelenk) bis ca. 10 Elemente, vorzugsweise 4 Elemente betragen.
Die Elemente können zum Erreichen gleicher Steifigkeiten und gleicher Dämpfung in alle Richtungen symmetrisch am Umfang des Tilgers verteilt werden. Sie können aber auch unsymmetrisch zum Erreichen unterschiedlicher Steifigkeiten und unterschiedlicher Dämpfung in der Pendelebene eingebaut werden. Damit können gezielt verschiedene Eigenfrequenzen in verschiedenen Richtungen der Pendelebene x / y realisiert werden.

Die Elemente können wie in Abb. 4 dargestellt im oberen Bereich des Pendelgelenkes eingesetzt werden. Gleichzeitig ist es möglich, diese wie die beschriebenen Federdämpfer Elemente an jedem beliebigen Ort zwischen dem stationären Turm und dem Pendel einzusetzen. Die hydraulischen Dämpfungselemente können durch die Elastomerbauteile (7) eine zusätzliche Steifigkeit in das System einbringen. Die Elastomerbauteile können jedoch auch so weich gestaltet werden, daß deren Steifigkeit einen zu vernachlässigenden Einfluß auf das Tilgersystem hat. Ferner können zum Erreichen einer hohen Steifigkeit auch zwei Elastomerkörper (7) gegeneinander verspannt werden.

Erfindungsgemäß können auch halb-aktive hydraulischer Schwingungstilger verwendet werden. Diese Tilger sind grundsätzlich wie die oben beschriebenen Tilger aufgebaut. Der entscheidende Unterschied ist, daß die Drosselventile (16) über eine Elektronik oder über eine mechanische Einrichtung, welche durch Schwingungen von Bauteilen beeinflußt wird, angesteuert werden können.

Somit kann die Dämpfung in Abhängigkeit von den auftretenden Schwingungen im Turm und an sonstigen Bauteilen, wie z.B. Rotorblätter eingestellt werden. Im Extremfall kann der Dämpfer durch vollkommene Drosselung der Drosselventile (16) fest mit dem Turm verbunden werden und im richtigen Moment mit gezielt eingestellter Dämpfung wieder losgelassen werden, so daß er gezielt einer auftretenden Schwingung entgegen wirken kann. Er ist damit in der Lage, auch Schwingungen, welche mit anderen Frequenzen als der eingestellten Tilgerfrequenz auftreten, entgegen zu wirken.

Bei dem halb-aktiven Tilger gemäß der Erfindung wird die Drossel (16) elektrisch in Abhängigkeit von den Schwingungen an Turm Maschinenhaus oder Flügel gesteuert. Dabei kann sowohl jedes Ventil einzeln angesteuert werden als auch Kombinationen bestehend aus mehreren oder allen Ventilen. Die Schwingungssignale werden von Beschleunigungsaufnehmern (18), die an den kritischen Bauteilen angebracht werden erfaßt und per Kabel oder per Sender (23) und Empfänger (24) zum Rechner (19) geschickt. Der Rechner erfaßt weiterhin den jeweiligen Zustand des Pendels über die am Pendel in den entscheidenden horizontalen Schwingrichtungen angebrachten Beschleunigungsaufnehmer (18).
Der Rechner (19) wandelt die Eingangssignale in Befehle um mit denen er über den Verstärker (20) die Ansteuerung der Drossel (16) erfolgt. Mit diesem System kann der Tilger durch gezieltes Drosseln oder Öffnen einer oder mehrerer Drosseln (16) auch Schwingungen außerhalb des Turmes entgegenwirken. Die im Turm entstehenden Schwingungen können bei gleicher Tilgermasse mit diesem System besser getilgt werden als bei konstanter Dämpfung.

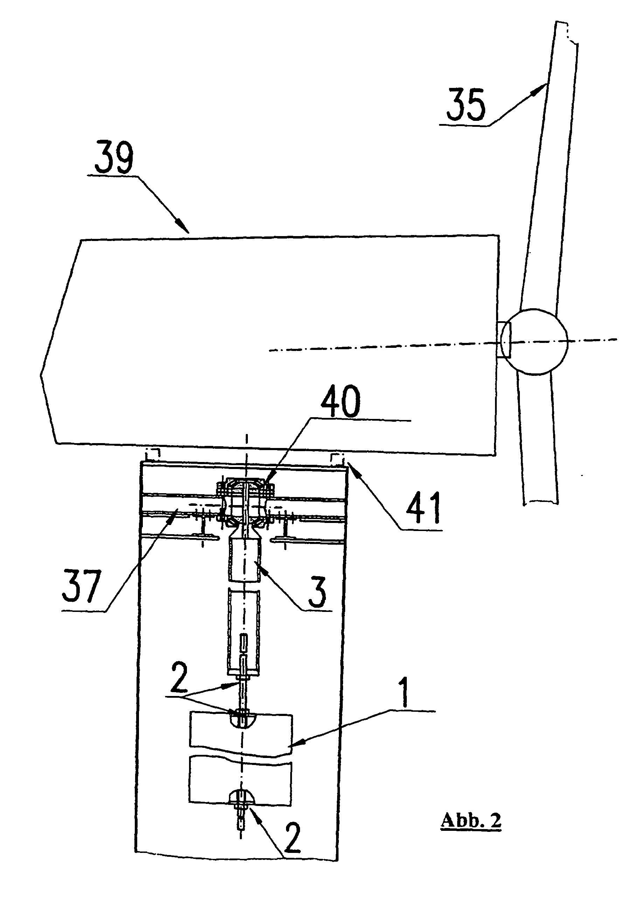

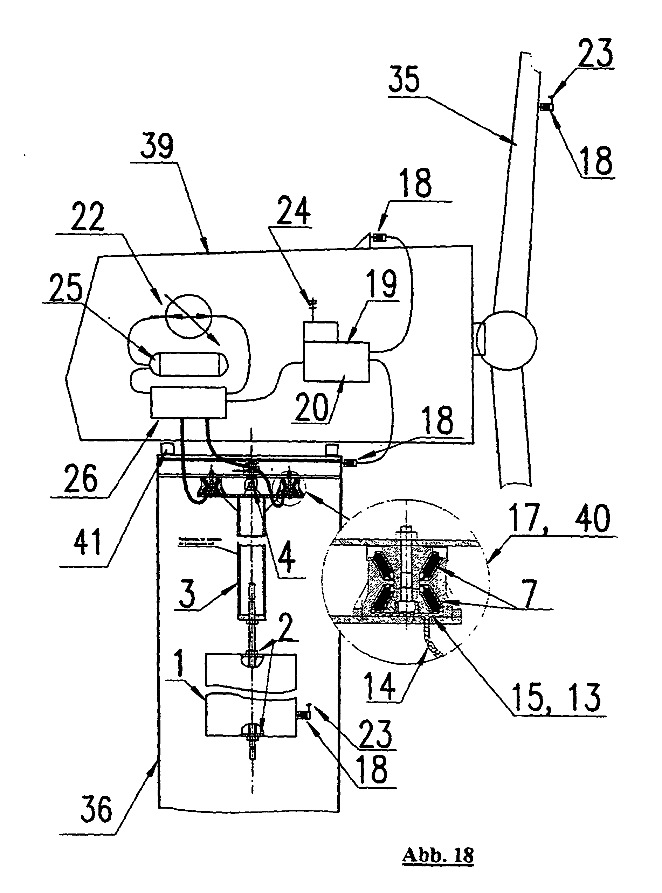

Besonders vorteilhafte Eigenschaften besitzen die erfindungsgemäßen neuen Schwingungstilger mit aktiver Dämpfung. Diese Tilger haben einen ähnlichen Aufbau wie die oben beschriebenen halb-aktiven Tilger. Der wesentliche Unterschied ist, daß des Pendel durch zusätzlich eingebrachte Fremdenergie bewegt werden kann. Die Fremdenergie kann durch eine Pumpe, einen Kompressor oder einen Motor geliefert werden. Die aktiven Systeme können beliebig ein- und ausgeschaltet werden. Es besteht weiterhin die Möglichkeit bei ausgeschaltetem System die Tilger passiv oder halbaktiv zu betreiben. (z.B. als Notsystem) Bei dem aktiven Tilgersystem können beliebig viele aktive Glieder am Umfang angeordnet werden. Die aktiven Glieder (Abb. 18, (17)) können kreisförmig um die Pendelmittelachse oder auch unsymmetrisch angeordnet werden. Die aktiven Glieder können an jedem Punkt zwischen Hauptmasse und Tilgermasse angeordnet werden. Das Minimum ist ein aktives Glied mit zusätzlichem Pendelgelenk. Das Pendelgelenk kann als Kardangelenk analog Abb. 1, (4) oder auch als Elastomerelement analog Abb. 2, (4) eingesetzt werden. Das Pendelgelenk kann auch abweichend von Abb. 18 in den aktiven Gliedern integriert werden, so daß keine zusätzliche Pendelaufhängung nötig ist.

Das Pendel kann durch die aktiven Bauteile stärker beschleunigt werden als das passive Pendel. Somit kann die Pendelmasse bei gleichbleibenden Reaktionskräften deutlich kleiner werden. Es können beliebig viele aktive Tilger in eine Windkraftanlage eingebaut werden.

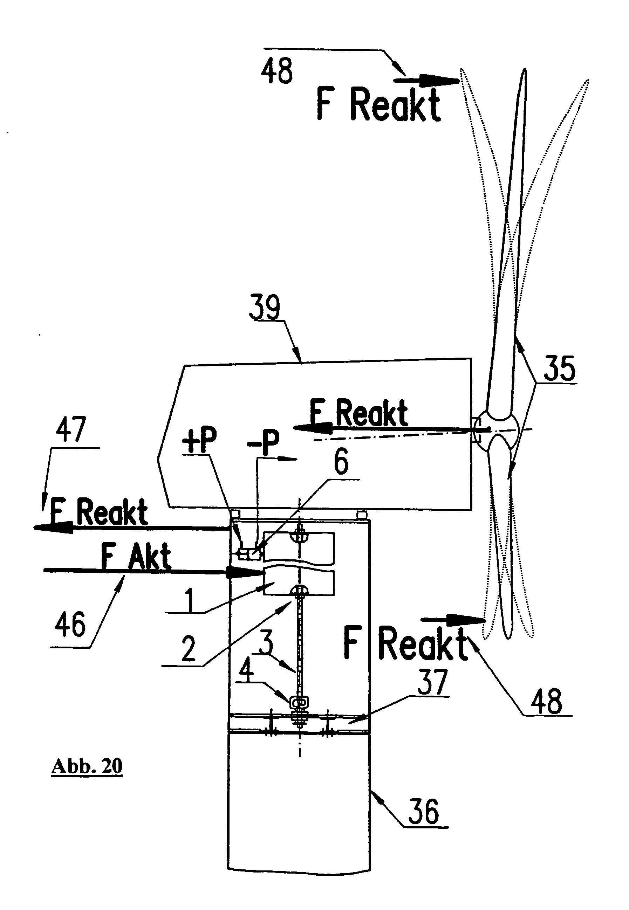

Abb. 20 zeigt die prinzipielle Funktion eines erfindungsgemäßen Schwingungstilgers bei der Tilgung von Blattschwingungen. Während sich das Rotorblatt (35) in der Bildebene nach links bewegt, wird die Tilgermasse nach rechts bewegt, was dem Turm der Windkraftanlage als Reaktionskraft einen Impuls nach links verleiht. Bei richtiger zeitlicher Zuordnung zur Rotorblattschwingung wird diese dadurch beruhigt. Das System kann bei Schwingungen in der Rotorblattebene und in der Umfangsrichtung angewendet werden.
Natürlich werden dadurch auch die Folgeschwingungen der Blätter reduziert.

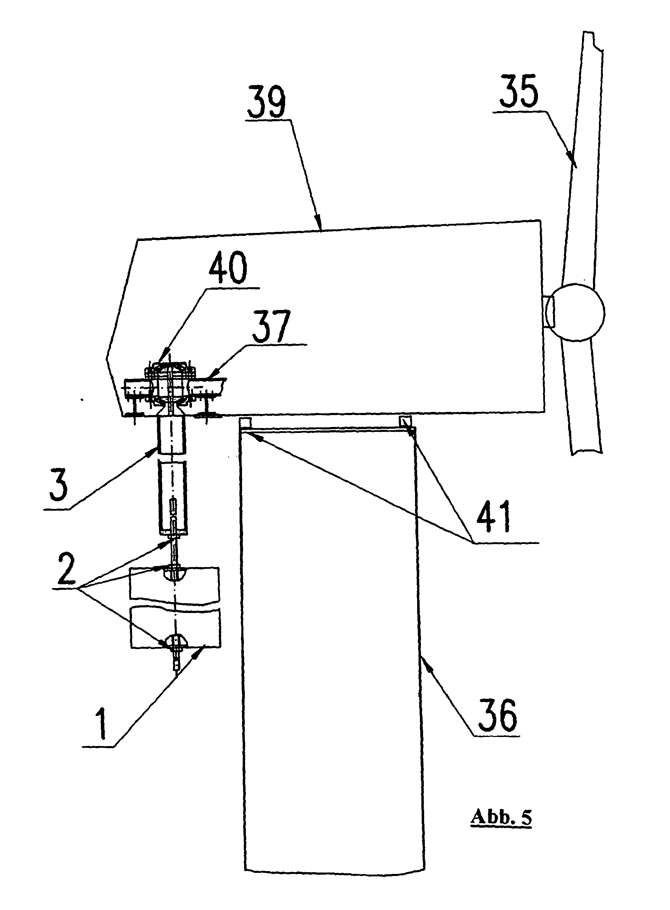

Bei Anordnung des Tilgers außerhalb des Turmes, wie in Abb. 5 für den passiven Tilger dargestellt, können auch Gierbewegungen (Kreisbewegungen um die Turmachse) der Gondel reduziert werden. Dies ist beim Anfahren und beim Bremsen des Azimutantriebes vorteilhaft. Auch können mit diesem außen hängenden oder stehenden aktiven Tilger die durch Wind erregten Gierbewegungen der Anlage reduziert werden, was den Aufwand für Azimutantrieb und Azimutbremsen, sowie auch für die Dimensionierung der sonstigen tragenden Bauteile reduziert.

Der Tilger kann in jeder Lage angeordnet werden (vertikal, horizontal und sonstige beliebige Raumachsen) und in beliebige Richtungen einer Ebene beschleunigt werden und damit allen an der Windkraftanlage entstehenden Schwingungen entgegenwirken. Das Hydraulische Elastomerlager (Aktuator) kann selbst eine nennenswerte Steifigkeit haben wie in Abb. 18 oder auch nur untergeordnet zur Steifigkeit des Gesamtsystems beitragen.
Wenn die bisher beschriebenen hydraulischen Dämpfüngsglieder aktiv angesteuert werden, können sie als Aktuatoren verwendet werden. In Abb. 19 sind mehrere weitere Typen möglicher Aktuatoren, wie einfach wirkender Hydraulikzylinder (27), zweiseitig wirkender Hydraulikzylinder (28), Hydraulikzylinder mit Federunterstützung (18), hydraulisch aktives Elastomerlager (30), Luftfeder (31), Aktuator mit Magnetantrieb (32), Aktuator mit Motorantrieb (33), Aktuator mit Exzenterantrieb (34) dargestellt.

Der Antrieb des Tilgers erfolgt über Pumpe (22) bzw. Kompressor oder über direkte elektrische Stellglieder. Um bei kleinem Hydraulikantrieb bzw. Kompressor schnelle kurzfristige Bewegungen realisieren zu können, bietet sich der Einsatz von Speichern (Abb. 18 (25)) an. Möglich sind Hydraulikspeicher (22) (Abb. 18) oder auch Gasspeicher.
Die Steuerung und Regelung der aktiven Elemente erfolgt mit der Hydrauliksteuerung (26). Alternativ kann eine pneumatische Steuerung verwendet werden. Die sonstigen Stellglieder Abb. 19 ((32), (33), (34)) werden direkt elektrisch angetrieben.

Die Ansteuerung der erfindungsgemäßen Schwingungstilgern erfolgt in Abhängigkeit von den an der Windkraftanlage auftretenden Schwingungen. Diese können direkt am Entstehungsort gemessen werden z.B. am Flügel (Abb. 18, (18)). Bei Messung am Flügel muß das Signal über Schleifringe oder über Funk übertragen werden. Um diesen Aufwand zu vermeiden, könne die Schwingungen auch direkt an der Gondel gemessen werden. Die bekannten kritischen Frequenzen werden im Rechner aus den Signalen herausgefiltert und wie die direkt gemessenen Signale in entsprechende Signale zur Ansteuerung des Tilgers umgesetzt, so daß der Tilger den in der Windkraftanlage auftretenden störenden Schwingungen entgegenwirkt. Der Tilger kann mehrere Frequenzen in gleichen und unterschiedlichen Raumachsen gleichzeitig ausführen. Er kann aber auch zeitlich versetzt den unterschiedlichen auftretenden Schwingungen gezielt entgegenwirken.

Wie oben bereits beschrieben, umfaßt die Erfindung auch solche Tilger, die mehrere Pendelstangen, an denen die Pendelmasse (1) befestigt ist, aufweisen. Vorzugsweise haben derartige Tilger zwei bis vier, insbesondere drei Pendelstangen. Die Pendelstangen weisen nicht nur kardanische mit Dämpfungsmitteln versehen Gelenke, die an der Trägerkonstruktion (37, 52) befestigt sind auf, sondern in einer bevorzugten Ausführungsform entsprechende Gelenke auch an ihrem anderen Ende, an welchem sich die Masse (1) befindet. Durch diese Anordnung schwingt die Masse parallel zur x/y- Richtung. Die Steifigkeit der Pendellagerung setzt sich dabei aus der Summe der Steifigkeiten aller Gelenke zusammen. Auch das zweite Gelenk kann die erfindungsgemäßen Dämpfungsmittel (40), welche im wesentlichen aus mehreren, vorzugsweise drei bis sechs Elastomermodulen (7) sowie gegebenenfalls zusätzlichen oben beschriebenen, hydraulischen oder auch mechanischen Dämpfungsmitteln, besteht, aufweisen. Die Pendelstangen können mit dem zweiten Pendelgelenk oberhalb der Pendelmasse mit dieser verbunden werden. Sie können auch, wie in Abb. 22 gezeichnet, in die Pendelmasse hineinragen, durch die Pendelmasse hindurchgeführt oder auch außerhalb der Pendelmasse an dieselbe angebracht werden.

Schwingungstilger mit mehreren Pendelstangen sind insbesondere geeignet für den Einbau vorzugsweise in den hinteren Teil der Gondel und tragen zur effektiven Reduzierung von horizontalen Schwingungen bei, welche insbesondere durch die sich drehenden Rotorblätter erzeugt werden.

## Patentansprüche

1. Schwingungstilger, geeignet zur Dämpfung von Schwingungen in Windkraftanlagen, bestehend im wesentlichen aus Schwungmasse, Pendelstange, Pendellager bzw. -gelenk und Dämpfungsmitteln, wobei Schwungmasse, Pendellänge und Stärke der Dämpfungsmittel auf die physikalischen Eigenschaften der Windkraftanlage in der Weise angepaßt sind, daß die Schwungmasse im Vergleich zum Bauwerk phasenverschoben schwingt,
**dadurch gekennzeichnet, daß** die Dämpfungsmittel (40) zusammen mit dem Pendelgelenk (4) eine baulich abgeschlossene Einheit bilden und im wesentlichen aus einem oder mehreren Elastomermodulen (7) bestehen, wobei der Tilger in beliebige Richtungen einer Ebene beschleunigt werden kann.

2. Schwingungstilger nach Anspruch 1, **dadurch gekennzeichnet, daß** er zusätzliche Dämpfungsmittel hydraulischer Art (17) oder mechanischer Art (5), (6) aufweist.

3. Schwingungstilger nach Anspruch 1 oder 2, **dadurch gekennzeichnet, daß** die Elaostomermodule (7) zur Regulierung ihrer Steifigkeit eine oder mehrere Distanzscheiben (8) aufweisen.

4. Schwingungstilger nach einem der Ansprüche 1 bis 3, **dadurch gekennzeichnet, daß** die Dämpfungsmittel (40) aus vier Elastomermodulen (7) bestehen, welche um das Pendelgelenk (4) herum verteilt sind.

5. Schwingungstilger nach einem der Ansprüche 1 bis 4, **dadurch gekennzeichnet, daß** die Pendelstange (3) selbst elastisch ist.

6. Schwingungstilger nach Anspruch 5, **dadurch gekennzeichnet, daß** die Pendelstange (3) im wesentlichen aus einzelnen Elastomerbauteilen besteht.

7. Schwingungstilger nach Anspruch 5, **dadurch gekennzeichnet, daß** die Pendelstange (3) im wesentlichen aus einem geflochtenen Drahtseil oder einem rohrförmigen Drahtseilgeflecht besteht.

8. Schwingungstilger nach einem der Ansprüche 1 bis 7, **dadurch gekennzeichnet, daß** die Schwungmasse (1) an mehreren Pendelstangen (3) mit mehreren besagten Pendelgelenken (4) und mehreren besagten Dämpfungsmitteln (40) befestigt ist.

9. Windkraftanlage bestehend im wesentlichen aus einem Turm (36) und einem Maschinenhaus (39), in und an welchem Antriebsmittel und Rotorblätter (35) angebracht sind , **dadurch gekennzeichnet, daß** sie einen Schwingungstilger gemäß der Ansprüche 1 - 8 aufweist.

10. Windkraftanlage nach Anspruch 9, **dadurch gekennzeichnet, daß** der Schwingungstilger am Pendelgelenk (4) frei beweglich an der Trägerkonstruktion (37) ohne weitere Verbindung zum Turm oder Maschinenhaus angebracht ist.

11. Windkraftanlage nach Anspruch 9 oder 10, **dadurch gekennzeichnet, daß** der Schwingungstilger so angebracht ist, daß sich seine Schwungmasse (1) oberhalb des Pendelgelenks (4) befindet.

12. Windkraftanlage nach einem der Ansprüche 9 bis 11, **dadurch gekennzeichnet, daß** besagter Schwingungstilger außerhalb des Turms im oder am besagten Maschinenhaus (39) angebracht ist.

## Claims

1. Vibration absorber, suitable for damping vibrations in wind turbines, essentially consisting of a pendulum weight, pendulum rod, pendulum bearing or joint and damping means, where the pendulum weight, pendulum length and strength of the damping means are matched to the physical properties of the wind turbine in such a way that the pendulum weight vibrates in a phase-shifted manner compared with the structure,
**characterised in that** the damping means (40) form a structurally self-contained unit together with the pendulum joint (4) and essentially consist of one or more elastomer modules (7), where the absorber can be accelerated in any desired directions of a plane.

2. Vibration absorber according to Claim 1, **characterised in that** it has additional damping means of a hydraulic type (17) or of a mechanical type (5), (6).

3. Vibration absorber according to Claim 1 or 2, **characterised in that** the elastomer modules (7) have one or more spacer discs (8)for adjusting their rigidity.

4. Vibration absorber according to one of Claims 1 to 3, **characterised in that** the damping means (40) consist of four elastomer modules (7) distributed around the pendulum joint (4).

5. Vibration absorber according to one of Claims 1 to 4, **characterised in that** the pendulum rod (3) is itself elastic.

6. Vibration absorber according to Claim 5, **characterised in that** the pendulum rod (3) essentially consists of individual elastomer components.

7. Vibration absorber according to Claim 5, **characterised in that** the pendulum rod (3) essentially consists of a plaited wire cable or a tubular wire cable braid.

8. Vibration absorber according to one of Claims 1 to 7, **characterised in that** the pendulum weight (1) is attached to a plurality of pendulum rods (3) using a plurality of said pendulum joints (4) and a plurality of said damping means (40).

9. Wind turbine essentially consisting of a tower (36) and a machine house (39) in and on which drive means and rotor blades (35) are mounted, **characterised in that** it has a vibration absorber according to Claims 1-8.

10. Wind turbine according to Claim 9, **characterised in that** the vibration absorber is mounted on the pendulum joint (4) in a freely movable manner on the supporting structure (37) with no further connection to the tower or machine house.

11. Wind turbine according to Claim 9 or 10, **characterised in that** the vibration absorber is mounted in such a way that its pendulum weight (1) is located above the pendulum joint (4).

12. Wind turbine according to one of Claims 9 to 11, **characterised in that** said vibration absorber is mounted outside the tower in or on said machine house (39).

## Revendications

1. Absorbeur de vibrations, convenant pour amortir des vibrations dans des éoliennes, constitué essentiellement par une masse de pendule, une tige de pendule, un palier ou une jonction de pendule et des moyens d'amortissement, dans lequel la masse de pendule, la longueur de pendule et la résistance mécanique des moyens d'amortissement sont adaptées aux propriétés physiques de l'éolienne de telle sorte que la masse de pendule vibre en déphasage par comparaison avec la structure, **caractérisé en ce que** les moyens d'amortissement (40) forment une unité structurellement autonome en association avec la jonction de pendule (4) et sont constitués essentiellement par un ou plusieurs modules élastomériques (7), dans lequel l'absorbeur peut être accéléré dans n'importe quelles directions souhaitées d'un plan.

2. Absorbeur de vibrations selon la revendication 1, **caractérisé en ce qu'**il comporte des moyens d'amortissement additionnels d'un type hydraulique (17) ou d'un type mécanique (5), (6).

3. Absorbeur de vibrations selon la revendication 1 ou 2, **caractérisé en ce que** les modules élastomériques (7) comportent un ou plusieurs disques espaceurs (8) pour régler leurs rigidités.

4. Absorbeur de vibrations selon l'une des revendications 1 à 3, **caractérisé en ce que** les moyens d'amortissement (40) sont constitués par quatre modules élastomériques (7) distribués autour de la jonction de pendule (4).

5. Absorbeur de vibrations selon l'une des revendications 1 à 4, **caractérisé en ce que** la tige de pendule (3) est elle-même élastique.

6. Absorbeur de vibrations selon la revendication 5, **caractérisé en ce que** la tige de pendule (3) est constituée essentiellement par des composants élastomériques individuels.

7. Absorbeur de vibrations selon la revendication 5 , **caractérisé en ce que** la tige de pendule (3) est constituée essentiellement par un câble filaire tressé ou par une tresse de câbles filaires tubulaire.

8. Absorbeur de vibrations selon l'une des revendications 1 à 7, **caractérisé en ce que** la masse de pendule (1) est fixée à une pluralité de tiges de pendule (3) en utilisant une pluralité desdites jonctions de pendule (4) et une pluralité desdits moyens d'amortissement (40).

9. Eolienne constituée essentiellement par une tour (36) et par un carter de machine (39) dans et sur lesquels des moyens d'entraînement et des pales de rotor (35) sont montés, **caractérisée en ce qu'**elle comporte un absorbeur de vibrations selon les revendications 1-8.

10. Eolienne selon la revendication 9, **caractérisée en ce que** l'absorbeur de vibrations est monté sur la jonction de pendule (4) de manière à être mobile librement sur la structure de support (37) sans autre connexion sur la tour ou le carter de machine.

11. Eolienne selon la revendication 9 ou 10, **caractérisée en ce que** l'absorbeur de vibrations est monté de telle sorte que sa masse de pendule (1) soit localisée au-dessus de la jonction de pendule (4).

12. Eolienne selon l'une des revendications 9 à 11, **caractérisée en ce que** ledit absorbeur de vibrations est monté à l'extérieur de la tour dans ou sur ledit carter de machine (39).
